# EUROPEAN PATENT APPLICATION

(11) **EP 4 131 120 A1**
(43) Date of publication of application: **08.02.2023**
(21) Application number: 22187255.9
(22) Date of filing: 27.07.2022
(51) Int. Cl.: G06Q 30/02, G07C 5/00

(54) **INFORMATION PROCESSING DEVICE, SYSTEM, AND INFORMATION PROCESSING METHOD**

(30) Priority: 03.08.2021 JP 2021127798
(71) Applicant: TOYOTA JIDOSHA KABUSHIKI KAISHA, Aichi-Ken 471-8571 (JP)
(72) Inventor: NAKASHIMA, Toyokazu, TOYOTA-SHI, AICHI-KEN, 471-8571 (JP); TAKEMOTO, Takeshi, TOYOTA-SHI, AICHI-KEN, 471-8571 (JP); YAMAFUJI, Naoko, TOYOTA-SHI, AICHI-KEN, 471-8571 (JP); OKA, Naoya, TOYOTA-SHI, AICHI-KEN, 471-8571 (JP)
(74) Representative: Cabinet Beau de Loménie

(57) **Abstract**

An information processing device (10) stores vehicle information on each of a plurality of vehicles (40), and the information processing device (10) includes one or more processors configured to: acquire an attribute of a user who browses the vehicle information; and change a display content that is the vehicle information displayed on a terminal device (20) based on the attribute.

## Description

### 1. Field of the Invention

The present disclosure relates to an information processing device, a system, and an information processing method.

### 2. Description of Related Art

In the related art, there is known a technique related to recording or browsing a vehicle chart (also referred to as a car log [car condition log]) that records useful information when assessing a vehicle (automobile). For example, Japanese Unexamined Patent Application Publication No. 2010-9572 (JP 2010-9572 A) describes an information processing system including a chart server having a database that records a management history for each vehicle, and one or more terminals that are connected to the chart server via a network and can read and write data to the database. It is disclosed that the database includes a record item column for recording the management history of a vehicle for each vehicle, and the record item column has a user record item column in which an owner or a user of the vehicle can write management history data and an organization record item column in which a predetermined organization including an auto auction venue can write the management history data.

### SUMMARY OF THE INVENTION

There is room for improvement in the technique related to a provision or browsing of the vehicle chart.

The present disclosure improves a technique related to a provision or browsing of a vehicle chart.

An information processing device according to a first aspect of the present disclosure stores vehicle information on each of a plurality of vehicles, the information processing device includes one or more processors configured to: acquire an attribute of a user who browses the vehicle information; and change a display content that is the vehicle information displayed on a terminal device based on the attribute.

A system according to a second aspect of the present disclosure includes an information processing device according to the first aspect, and one or more terminal devices. Each of the one or more terminal devices includes a display configured to display the vehicle information transmitted from the information processing device.

An information processing method according to a third aspect of the present disclosure is a method of providing vehicle information on each of a plurality of vehicles. The information processing method includes: acquiring an attribute of a user who browses the vehicle information by an information processing device; changing a display content that is the vehicle information displayed on a terminal device based on the attribute by the information processing device; and transmitting the changed display content to the terminal device by the information processing device.

With the embodiment of the present disclosure, the technique related to the provision or browsing the vehicle chart is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a schematic configuration of a system according to an embodiment of the present disclosure;
FIG. 2 is a block diagram illustrating a schematic configuration of an information processing device according to the embodiment of the present disclosure;
FIG. 3 is a block diagram illustrating a schematic configuration of a terminal device;
FIG. 4A is a diagram illustrating an example of display items of a vehicle chart;
FIG. 4B is a diagram illustrating an example of display items of the vehicle chart;
FIG. 4C is a diagram illustrating an example of display items of the vehicle chart;
FIG. 4D is a diagram illustrating an example of display items of the vehicle chart;
FIG. 5 is a sequence diagram illustrating an example of an operation of a system according to the embodiment; and
FIG. 6 is a flowchart illustrating an example of processing of the information processing device according to the embodiment.

### DETAILED DESCRIPTION OF EMBODIMENTS

Hereinafter, embodiments of the present disclosure will be described. Outline of Embodiment

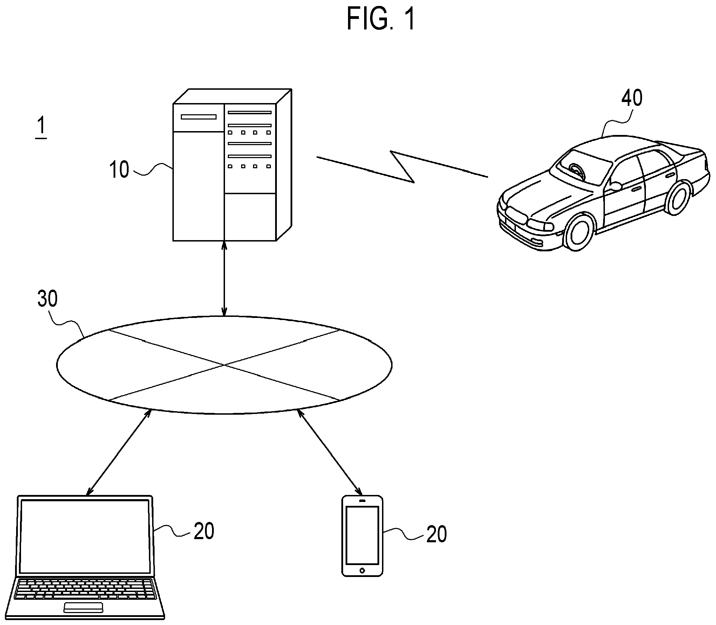

FIG. 1 is a diagram illustrating a schematic configuration of a system 1 according to an embodiment of the present disclosure. The system 1 is provided with an information processing device 10 and a terminal device 20, such as a smartphone or a computer. The information processing device 10 and the terminal device 20 are communicably connected by a network 30 including, for example, the Internet and a mobile communication network. The information processing device 10 can be configured to receive information related to a condition and traveling of a vehicle from a vehicle 40 via any communication means.

For example, the information processing device 10 is a computer, such as a server device. The information processing device 10 records (stores) vehicle charts of a large number of vehicles, that is, vehicle information on each of a plurality of vehicles. The information processing device 10 can transmit the vehicle information to a terminal device 20, such as a smartphone or the computer via a network 30. The information processing device 10 is managed by a company that operates the present system which provides vehicle information.

The terminal device 20 includes, for example, a smartphone, a tablet, or a computer owned by an individual (general consumer) who is a user or a salesperson of the vehicle. The terminal device 20 may be a computer provided in a company operating the present system, its office, or a used car dealer using the vehicle chart. The terminal device 20 can access the vehicle chart recorded in the information processing device 10 and browse the vehicle information via the network 30.

The vehicle 40 is, for example, an automobile, but is not limited thereto, and may be any vehicle. Examples of the vehicle include a gasoline vehicle, a battery electric vehicle (BEV), a hybrid electric vehicle (HEV), a plug-in hybrid electric vehicle (PHEV), or a fuel cell electric vehicle (FCEV), and not limited thereto. The number of vehicles 40 included in the system 1 may be randomly determined.

In the present embodiment, the vehicle 40 is provided with a communication device, such as a data communication module (DCM), and has a function of collecting and transmitting information related to the condition and traveling of the vehicle 40. The information transmitted from the vehicle 40 is transmitted to the information processing device 10 and recorded in the information processing device 10 as a part of the vehicle information of the vehicle chart. The information transmitted from the vehicle 40 may be directly stored in the vehicle chart of the information processing device 10 as it is. Alternatively, the information transmitted from the vehicle 40 may be once analyzed or processed by the information processing device 10 or another information processing device, and then recorded in the information processing device 10 as vehicle information of the vehicle chart.

First, an outline of the present embodiment will be described, and the details will be described later. The user of the system 1 accesses the information processing device 10 from the terminal device 20 in order to browse the vehicle information. The information processing device 10 acquires an attribute of the user who browses the vehicle information (vehicle chart), and selects or changes a display content which is the vehicle information to be displayed on the terminal device based on the attribute thereof. Vehicle information according to the attribute of the user is displayed on the terminal device 20 of the user.

As described above, according to the present embodiment, the information processing device 10 acquires the attribute of the user and selects or changes the display content of the vehicle information according to the attribute thereof. For example, when a vehicle salesperson or an employee of an operating company of the present system accesses the information processing device 10 from the terminal device 20, all the items of the vehicle information recorded in the vehicle chart are displayed on the terminal device 20. On the other hand, when an individual user of a general consumer accesses the information processing device 10 from the terminal device 20, selected vehicle information is displayed on the terminal device 20 with a part of information (for example, information because of which the general consumer may misunderstand the value of a vehicle) deleted (being unavailable) among the vehicle information described in the vehicle chart. Therefore, a technique related to a provision or browsing of the vehicle chart is improved in that appropriate vehicle information is provided according to the user.

Next, each configuration of the system 1 will be described in detail. Configuration of Information Processing Device

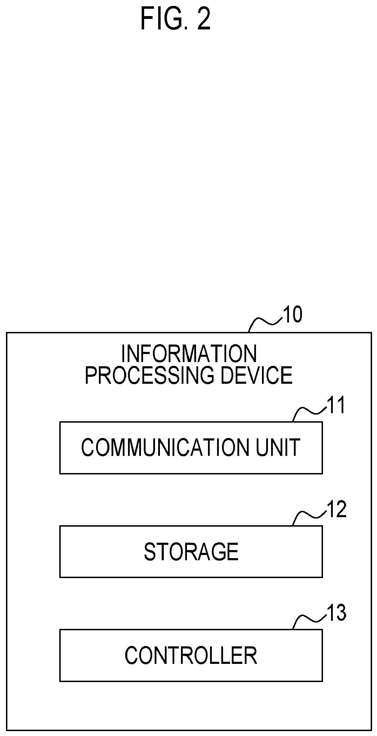

FIG. 2 is a block diagram illustrating a schematic configuration of the information processing device according to the embodiment of the present disclosure. The information processing device 10 is provided with a communication unit 11, a storage 12, and a controller 13.

The communication unit 11 includes one or more communication interfaces connected to the network 30. The communication interface corresponds to, for example, a mobile communication standard, a wired local area network (LAN) standard, or a wireless LAN standard, but is not limited to thereto, and may correspond to any communication standard. In the present embodiment, the information processing device 10 communicates with the terminal device 20 via the communication unit 11 and the network 30. The information processing device 10 may communicate with the vehicle 40, such as an automobile (for example, receive vehicle information) via the communication unit 11.

The storage 12 includes one or more memories. The memory is, for example, a semiconductor memory, a magnetic memory, or an optical memory, but is not limited thereto. Each memory included in the storage 12 may function as, for example, a main storage device, an auxiliary storage device, or a cache memory. The storage 12 stores vehicle information on each of vehicles as a vehicle chart. Details of the vehicle information recorded as the vehicle chart will be described later. In the storage 12, user information for associating identification information (user ID or terminal ID) on the user who uses the present system with the attribute of each user is stored, for example, as a user attribute file. Furthermore, the storage 12 stores any information used for an operation of the information processing device 10. For example, the storage 12 may store a system program, an application program, and a database. For example, the information stored in the storage 12 may be updatable with information acquired from the network 30 via the communication unit 11. For example, the vehicle information stored in the storage 12 is transmitted from the network 30 to the terminal device 20 via the communication unit 11.

The controller 13 includes one or more processors, one or more programmable circuits, one or more dedicated circuits, or a combination thereof. The processor is, for example, a general-purpose processor, such as a central processing unit (CPU) or a graphics processing unit (GPU), or a dedicated processor specialized for specific processing, but is not limited thereto. The programmable circuit is, for example, a field-programmable gate array (FPGA), but is not limited thereto. The dedicated circuit is, for example, an application specific integrated circuit (ASIC), but is not limited thereto. The controller 13 controls an operation of the entire information processing device 10. In the present embodiment, the controller 13 acquires the attribute of the user who browses the vehicle information, and selects or changes the display content which is the vehicle information to be displayed on the terminal device based on the attribute thereof.

### Configuration of Terminal Device

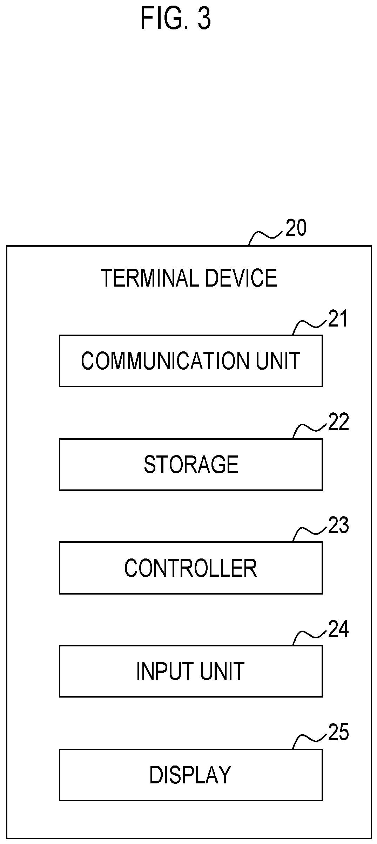

As illustrated in FIG. 3, the terminal device 20 is provided with a communication unit 21, a storage 22, a controller 23, an input unit 24, and a display 25. The terminal device 20 can take various forms, such as a smartphone, a computer, and a tablet, but generally has a configuration illustrated in FIG. 3.

The communication unit 21 includes one or more communication interfaces connected to the network 30. The communication interface corresponds to, for example, a mobile communication standard, such as a 4th generation (4G) or a 5th generation (5G), but is not limited thereto. The communication interface corresponds to a wired local area network (LAN) standard, or a wireless LAN standard, but is not limited to thereto, and may correspond to any communication standard. In the present embodiment, the terminal device 20 communicates with the information processing device 10 via the communication unit 21 and the network 30.

The storage 22 includes one or more memories. Each memory included in the storage 22 may function as, for example, a main storage device, an auxiliary storage device, or a cache memory. The storage 22 stores any information used for an operation of the terminal device 20. For example, the storage 22 may store a system program, an application program, and a database. For example, the information stored in the storage 22 may be updatable with information acquired from the network 30 via the communication unit 21. The storage 22 can store information for identifying the terminal device 20 (terminal ID) or the identification information on the user who uses the terminal device 20 (user ID).

The controller 23 includes one or more processors, one or more programmable circuits, one or more dedicated circuits, or a combination thereof. The controller 23 controls an operation of the entire terminal device 20. In the present embodiment, the controller 23 accesses the information processing device 10 via the communication unit 21 and performs a display control of vehicle information transmitted from the information processing device 10.

The input unit 24 is a device that can be operated by a user to input any characters or information, and includes, for example, one or more input devices, such as a keyboard, a mouse, and a touch panel. The input unit 24 may be a device having a voice input function. The user can input, for example, his or her identification information (user ID) or a search condition for the vehicle chart from the input unit 24.

The display 25 is a display device capable of displaying characters or images, and includes one or more display screens, such as a liquid crystal display and an electro luminescence (EL) display. In the present embodiment, the display 25 can display the vehicle information transmitted from the information processing device 10 in a predetermined format.

### Vehicle Chart

In the present disclosure, in addition to basic information, such as a type or model of the vehicle (automobile), the vehicle chart (car log) can include all information related to the value and evaluation of the vehicle, such as a usage status of the vehicle after the vehicle is sold and a record of repair and inspection of the vehicle. The vehicle chart can be used as evaluation data for determining a selling price of the vehicle, for example, when the vehicle is bought and sold as a used car. A second owner who purchases a used car can know a condition, performance, or maintenance history of the vehicle from the vehicle chart before purchasing the vehicle, and can purchase the used car at ease.

Acquisition of vehicle information recorded as the vehicle chart and disclosure of the vehicle information require a consent of an owner of the vehicle. For example, information related to the condition and traveling of the vehicle can be acquired or transmitted by a communication device, such as a DCM attached to the vehicle 40, and can be received or recorded by the information processing device 10. Therefore, for example, when a vehicle to which a DCM is attached is sold, consent can be obtained from a purchaser regarding the acquisition of the vehicle information. Disclosure of the vehicle information (issue, provision, or browsing of information) can be performed solely for a vehicle with the consent of the user from the viewpoint of personal information protection. Therefore, in the present embodiment, the vehicle information to be browsed or disclosed is premised on the consent of the vehicle owner.

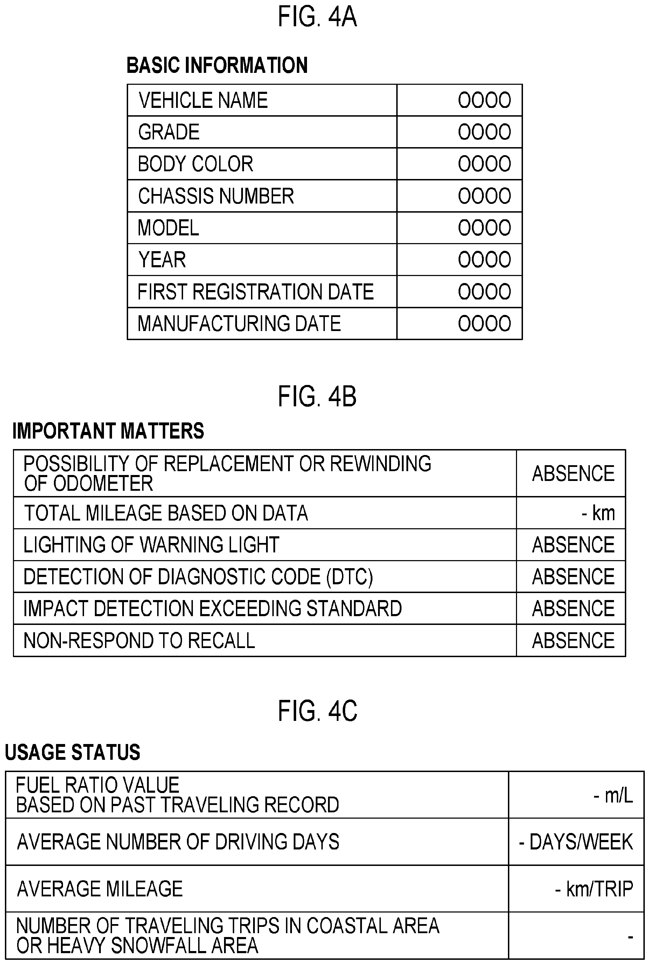

FIGS. 4A to 4D are examples of the vehicle information recorded or disclosed as the vehicle chart. In the present embodiment, the vehicle information is classified into basic information, important matters, usage status, and connected data performance diagnostic information, but classification is an example, and may be organized or recorded in other classification.

As illustrated in FIG. 4A, the "basic information" includes, for example, items, such as a vehicle name, a grade, a body color, a chassis number, a model, a year, a first registration date, and a manufacturing date.

As illustrated in FIG. 4B, in "important matters", for example, the presence or absence is recorded for items, such as a possibility of replacement or rewinding of ODOmeter, lighting of warning light, detection of diagnostic code (DTC), impact detection exceeding a standard, and non-respond to recall. The total mileage based on data of the ODOmeter may be included.

As illustrated in FIG. 4C, the "usage status" includes items, such as a fuel ratio value based on past traveling record, an average number of driving days, an average mileage, and the number of traveling trips in a coastal area or a heavy snowfall area.

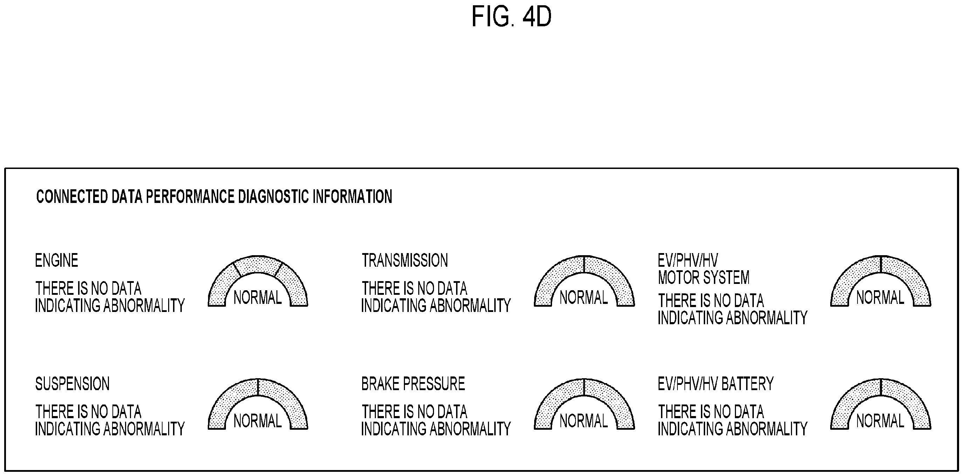

As illustrated in FIG. 4D, in the "connected data performance diagnostic information", the presence or absence of data indicating an abnormality is recorded for items, such as an engine, a transmission, a motor system, a suspension, a brake pressure, and a battery.

In the present disclosure, the vehicle information includes information related to the condition and traveling of the vehicle transmitted from the vehicle or information obtained by processing the information thereon. The vehicle information may include any information, such as a record of periodic inspections at a dealer and a history of engine oil replacement, in addition to the items illustrated in FIGS. 4A to 4D.

In providing the vehicle chart, for example, in Japan, the rules stipulated by the Automobile Fair Trade Council impose restrictions on the disclosure of vehicle information so that the user does not misunderstand the vehicle value. As a specific rule, it is stipulated that information that changes depending on an acquisition condition, such as an actual fuel efficiency and information that qualitatively evaluates a health degree of parts need not be provided to a general consumer without the explanation of the salesperson. Therefore, the system and the information processing device of the present disclosure change the content of the vehicle information displayed on the terminal device based on the attribute of the user when the vehicle chart is disclosed via the network.

First, the attributes of user are largely classified into two types, that is, a person in charge of vehicle (automobile) sales (vehicle salesperson) and other general consumers. Here, the person in charge of vehicle sales may include an organization that sells automobiles (automobile dealers, used car dealers, and auction venues). The company that operates the present system may be an organization that sells automobiles. The general consumer means an individual who has purchased or may purchase a vehicle, and in particular, means an individual who has registered to use the system 1 of the present disclosure.

Regarding the correspondence between the attributes of the user and the display items, the person in charge of vehicle sales can browse all the vehicle information stored in the vehicle chart, and the general consumer is restricted from browsing a part of the vehicle information stored in the vehicle chart. Specifically, when browsed by the general consumer, at least one of the information that changes depending on the acquisition conditions and the information related to the qualitative evaluation is deleted from the display content. Here, the information that changes depending on the acquisition conditions is the information related to the actual fuel efficiency, and the information on the qualitative evaluation is the deterioration diagnosis information on the vehicle. However, the information that changes depending on the acquisition conditions and the information related to the qualitative evaluation are not limited to the examples. Furthermore, the present system can also delete information on low interest to the general consumer from the display content of general consumer.

The classification of the attributes of the user and a correspondence between the attributes and the display contents are free in the design of the present system, and can be set by a system administrator, for example, from a management terminal of the information processing device 10. The attributes of the user may be further subdivided. For example, regarding the staff of an automobile dealer, it is possible to divide between the staff of the dealers affiliated with a system operating company and the staff of the used car dealers outside the affiliate, and limit the vehicle information displayed to the staff of the used car dealers outside the affiliate.

Furthermore, even when the user is a general consumer, when the user confirms the vehicle chart of the vehicle owned by the user, the restriction on browsing the vehicle information may be relaxed. That is, when the general consumer browses the vehicle information on the vehicle owned by the general consumer (himself or herself), the items to be deleted from the displayed contents may be restricted.

### Operation of System

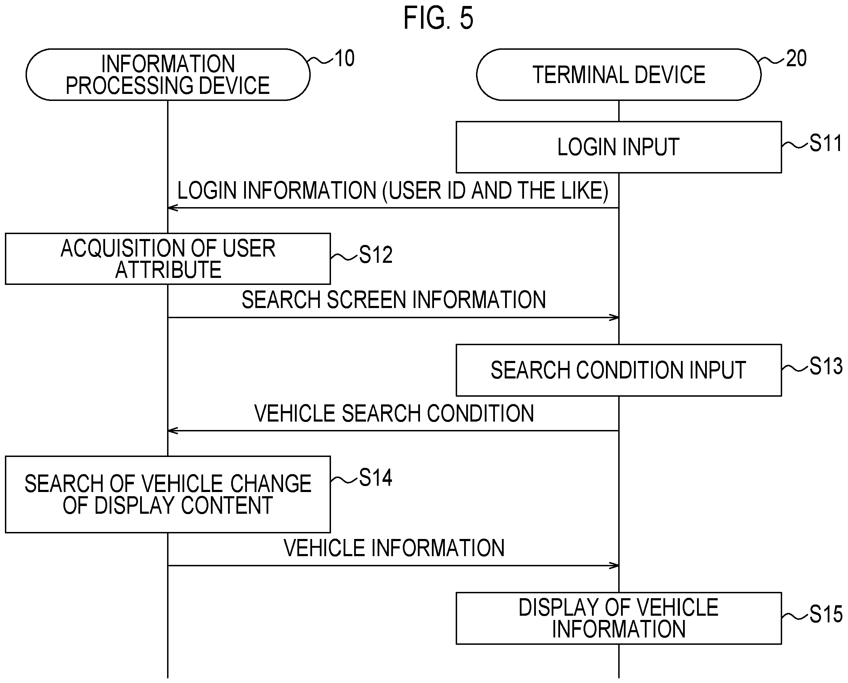

FIG. 5 is a sequence diagram illustrating an example of the operation of the system according to the embodiment. The relationship between the information processing device 10 and the terminal device 20 will be described with reference to FIG. 5.

Step S11: First, the terminal device 20 accesses a browsing system in order to browse the vehicle chart managed by the information processing device 10. For example, an application program for browsing the vehicle chart of the information processing device 10 is installed in the terminal device 20. The user of the terminal device 20 performs login input using the input unit 24 of the terminal device 20. It is desirable that login information includes the identification information on the user (user ID) or the identification information on the terminal device 20 (terminal ID). The login information is transmitted from the terminal device 20 to the information processing device 10.

Step S12: The information processing device 10 determines whether the user is an appropriate user based on the user identification information included in the login information, and acquires the attribute of the user. The information processing device 10 transmits information on a search screen of the vehicle chart (search screen information on the vehicle chart) to be browsed in response to the login from the appropriate user.

Step S13: The terminal device 20 displays a search condition input screen of the vehicle chart on the display 25. The user inputs a desired search condition of the vehicle to be browsed by the input unit 24. The search condition is, for example, an item of basic information of the vehicle chart (vehicle name, body type, and body color). The system may be designed so that any other item can be used as a search key. The terminal device 20 transmits the input vehicle search condition to the information processing device 10.

Step S14: The information processing device 10 searches for the corresponding vehicle based on the received vehicle search condition, and changes the displayed vehicle information according to the attribute of the user. Specifically, when the user is a general consumer, among the vehicle information, information that the general consumer may misunderstand the vehicle value (for example, information that changes depending on conditions and information related to qualitative evaluation) is restricted. The information processing device 10 transmits displayable vehicle information to the terminal device 20.

Step S15: The terminal device 20 displays the vehicle information transmitted from the information processing device 10 on the display 25.

### Processing Flow of Information Processing Device

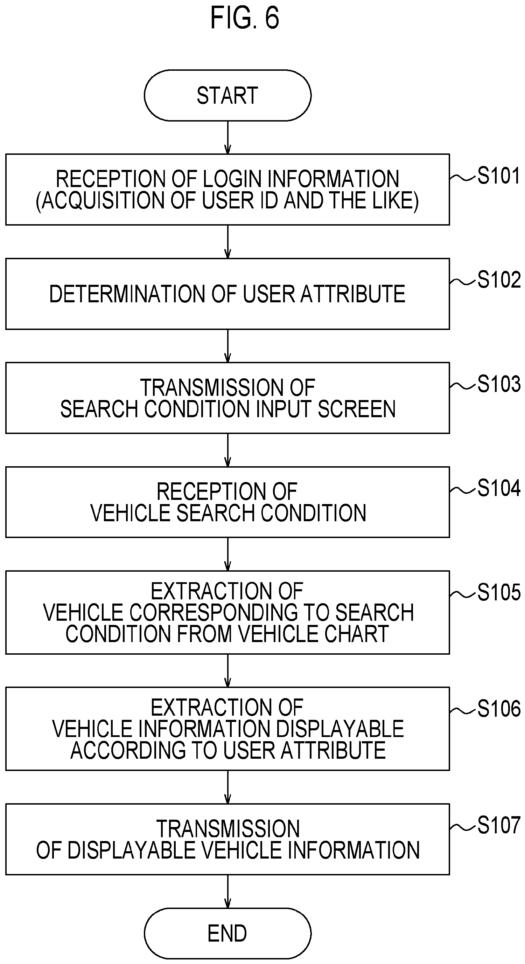

FIG. 6 is a flowchart illustrating an example of processing (information processing method) of the information processing device 10 according to the embodiment. The operation of the information processing device 10 according to the present embodiment will be described in more detail with reference to FIG. 6.

Step S101: The information processing device 10 receives the login information transmitted from the terminal device 20 via the communication unit 11. The login information includes the identification information on the user (user ID) or the identification information on the terminal device 20 (terminal ID). Therefore, the information processing device 10 acquires information (user ID or terminal ID) that identifies the user from the login information.

Step S102: The information processing device 10 determines whether the user is an appropriate user who has access authority to the system based on the acquired user ID or terminal ID, and further determines the attribute of the user. For the determination of the attribute of the user, for example, a user attribute file in which the user ID or the terminal ID and the attribute of each user are associated with each other is used.

Step S103: Next, the information processing device 10 transmits information on the search condition input screen of the vehicle chart to the terminal device 20. This search condition input screen may be changed according to the attributes of the user. Steps S101 to S103 up to this point correspond to step S12 in FIG. 5.

Step S104: The information processing device 10 receives the vehicle search condition transmitted from the terminal device 20.

Step S105: The information processing device 10 searches the recorded vehicle chart based on the received vehicle search condition, and extracts a vehicle corresponding to the search condition from the registered vehicles.

Step S106: Furthermore, the information processing device 10 extracts vehicle information displayable to the user according to the attributes of the user for the vehicle corresponding to the search condition. Alternatively, the display items of the vehicle information as a reference may be set in advance for the vehicle chart, and the information processing device 10 may change (add or delete) the display items according to the attributes of the user. For example, when the attribute of the user is a general consumer, the information processing device 10 deletes information that changes depending on acquisition conditions ("fuel ratio value based on past traveling record" in FIG. 4C) and information that qualitatively evaluates the health degree of parts ("connected data performance diagnostic information" in FIG. 4D) from display items.

Step S107: The information processing device 10 transmits displayable vehicle information to the terminal device 20. The vehicle information may be transmitted in a display format, such as a hypertext markup language (HTML) that can be displayed by the browser of the terminal device 20, or may be transmitted in an appropriate format according to the vehicle information (for example, format, such as a PDF document).

According to such a configuration, the display content which is the vehicle information displayed on the terminal device can be changed based on the attribute of the user who browses the vehicle chart (vehicle information). Therefore, the technique related to recording or browsing the vehicle chart is improved in that appropriate vehicle information is provided according to the user.

Although the present disclosure has been described based on the drawings and examples, it is noted that those skilled in the art may make various modifications and alterations based on the present disclosure. Therefore, it is required to be noted that the modifications and alterations are within the scope of the present disclosure. For example, functions included in each component or each step can be rearranged so as not to be logically inconsistent, and a plurality of components or steps can be combined or divided into one.

For example, in the above-described embodiment, an embodiment in which the configuration and operation of the information processing device 10 may be distributed to a plurality of computers capable of communicating with each other is also possible. For example, an embodiment in which a part of the components of the information processing device 10 is provided in the terminal device 20 is also possible.

For example, an embodiment in which a general-purpose computer functions as the information processing device 10 according to the above-described embodiment is also possible. Specifically, a program describing processing contents that realize each function of the information processing device 10 according to the above-described embodiment is stored in a memory of the general-purpose computer, and the program is read and executed by a processor. Therefore, the present disclosure can also be realized as the program that can be executed by the processor or a non-temporary computer-readable medium that stores the program.

## Claims

1. An information processing device (10) that stores vehicle information on each of a plurality of vehicles (40), the information processing device (10) comprising one or more processors configured to:
acquire an attribute of a user who browses the vehicle information; and
change a display content that is the vehicle information displayed on a terminal device (20) based on the attribute.

2. The information processing device (10) according to claim 1, wherein the one or more processors are configured to delete at least one of information that changes depending on an acquisition condition and information related to a qualitative evaluation from the display content when the attribute is a general consumer.

3. The information processing device (10) according to claim 2, wherein the information that changes depending on the acquisition condition includes information related to an actual fuel efficiency.

4. The information processing device (10) according to claim 2, wherein the information related to the qualitative evaluation includes deterioration diagnosis information on a vehicle.

5. The information processing device (10) according to claim 1, wherein the one or more processors are configured to include information that changes depending on an acquisition condition and information related to a qualitative evaluation in the display content when the attribute is a person in charge of vehicle sales.

6. The information processing device (10) according to any one of claims 1 to 5, wherein the vehicle information is information obtained based on information related to a condition and traveling of each of the vehicles (40) acquired via a communication device attached to each of the vehicles (40).

7. The information processing device (10) according to any one of claims 1 to 6, wherein the one or more processors are configured to acquire the attribute of the user based on a user ID or a terminal ID.

8. The information processing device (10) according to any one of claims 1 to 7, wherein the one or more processors are configured to search for a vehicle (40) to be browsed based on a search condition input by the user.

9. A system (1) comprising:
the information processing device (10) according to any one of claims 1 to 8; and
one or more terminal devices (20) each including a display configured to display the vehicle information transmitted from the information processing device (10).

10. The system (1) according to claim 9, wherein the one or more processors are configured to delete at least one of information that changes depending on an acquisition condition and information related to a qualitative evaluation from the display content when the attribute is a general consumer.

11. The system (1) according to claim 9, wherein the one or more processors are configured to include information that changes depending on an acquisition condition and information related to a qualitative evaluation in the display content when the attribute is a person in charge of vehicle sales.

12. The system (1) according to any one of claims 9 to 11, wherein:
the one or more terminal devices (20) each includes one or more second processors configured to transmit a user ID or a terminal ID to the information processing device (10); and
the one or more processors are configured to acquire the attribute of the user based on the user ID or the terminal ID.

13. An information processing method of providing vehicle information on each of a plurality of vehicles (40), the information processing method comprising:
acquiring, by an information processing device (10), an attribute of a user who browses the vehicle information;
changing, by the information processing device (10), a display content that is the vehicle information displayed on a terminal device (20) based on the attribute; and
transmitting, by the information processing device (10), the changed display content to the terminal device (20).

14. The information processing method according to claim 13, wherein the changing the display content based on the attribute includes deleting at least one of information that changes depending on an acquisition condition and information related to a qualitative evaluation from the display content when the attribute is a general consumer.

15. The information processing method according to claim 14, wherein the information that changes depending on the acquisition condition includes information related to an actual fuel efficiency.
